# EUROPEAN PATENT SPECIFICATION

(11) **EP 3 829 155 B1**
(45) Date of publication and mention of the grant of the patent: **23.04.2025**
(21) Application number: 19840166.3
(22) Date of filing: 26.06.2019
(51) Int. Cl.: H04N 13/243, B61K 9/08, H04N 13/271, H04N 13/239, H04N 7/18, G06T 7/593, G03B 35/08, G03B 15/00, G01C 3/06, B61K 13/00, H04N 23/45

(54) **IMAGING SYSTEM FOR RAILWAY VEHICLE**
BILDERZEUGUNGSSYSTEM FÜR EISENBAHNFAHRZEUG
SYSTÈME D'IMAGERIE POUR VÉHICULE FERROVIAIRE

(30) Priority: 24.07.2018 JP 2018138596
(43) Date of publication of application: 02.06.2021
(73) Proprietor: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: KOBAYASHI, Hiroyuki, Tokyo 105-0023 (JP); TAKAHASHI, Yusuke, Tokyo 105-0023 (JP); FUTAGAMI, Takuya, Tokyo 105-0023 (JP); HORIE, Masahiro, Tokyo 105-0023 (JP); SETO, Naoto, Tokyo 105-0023 (JP); YAMASAKI, Yoshiaki, Tokyo 105-0023 (JP); HATTORI, Yohei, Kawasaki-shi, Kanagawa 212-0013 (JP); ITO, Hiroaki, Kawasaki-shi, Kanagawa 212-0013 (JP)
(74) Representative: Hoffmann Eitle
(86) International application number: PCT/JP2019/025429
(87) International publication number: WO 2020/021949

(56) References cited:
- WO-A1-2017/056266
- JP-A- 2010 165 142
- JP-A- 2016 192 109
- JP-B2- 6 307 037
- US-A1- 2017 359 565
- US-A1- 2018 012 085

## Description

### FIELD

Embodiments described herein relate generally to an imaging system for a railway vehicle.

### BACKGROUND

Conventionally, various kinds of systems have been proposed, which include a stereo camera as an imaging device that captures images of an area in a traveling direction of a railway vehicle while running so as to inspect a railway track or detect an obstacle (a remarkable object) on the railway track. Such a stereo camera has been mainly utilized as a system in railway vehicles on which the driver actually rides to operate, serving to improve the safety of a railway operation by secondarily detecting an obstacle and determining whether the obstacle will affect the railway operation, for example.

US 2018/012085 A1 relates to a computer vision based driver assistance devices, systems, methods and associated computer executable code (hereinafter collectively referred to as: "ADAS"). An ADAS may include one or more fixed image/video sensors and one or more adjustable or otherwise movable image/video sensors, characterized by different dimensions of fields of view. An ADAS may include improved image processing. An ADAS may also include one or more sensors adapted to monitor/sense an interior of the vehicle and/or the persons within. An ADAS may include one or more sensors adapted to detect parameters relating to the driver of the vehicle and processing circuitry adapted to assess mental conditions/alertness of the driver and directions of driver gaze. These may be used to modify ADAS operation/thresholds.

JP 6 307037 B2 relates to a method and apparatus for detecting an obstacle present on a line by stereo image processing.

US 2017/359565 A1 relates to an image pickup device and an image pickup method for estimating the depth of an image having a repetitive pattern with high accuracy. The peripheral cameras are arranged according to base line lengths based on reciprocals of different prime numbers as having a position of a reference camera, to be a reference when images from different viewpoints are imaged, as a reference.

Recently, autonomous train operation has been variously studied. Thus, it is beneficial to provide an imaging system for a railway vehicle that can accurately detect obstacles in farther areas.

The object of the invention is achieved by the subject-matter of the independent claims. Advantageous embodiments are defined in the dependent claims. Further examples are provided for facilitating the understanding of the invention.

### BRIEF DESCRIPTION OF DRAWINGS

FIG. 1 is an exemplary and schematic diagram illustrating a configuration of the forefront of a railway vehicle including an imaging system for a railway vehicle according to an embodiment;
FIG. 2 is an exemplary and schematic diagram illustrating the positional relationship between a first camera and a second camera serving as a first imaging module and a third camera serving as a second imaging module in an imaging unit of the imaging system for a railway vehicle of the embodiment;
FIG. 3 is an exemplary and schematic diagram illustrating the configuration of the imaging system for a railway vehicle of the embodiment;
FIG. 4 is an exemplary and schematic diagram illustrating the positional relationship between a first area imaged by the first imaging module and a second area imaged by the second imaging module in the imaging system for a railway vehicle of the embodiment;
FIG. 5 is an exemplary and schematic flowchart of an obstacle detecting process of the imaging system for a railway vehicle of the embodiment; and
FIG. 6 is an exemplary and schematic flowchart of stereo image processing in the flowchart of FIG. 5.

### DETAILED DESCRIPTION

The following will describe embodiments with reference to the accompanying drawings. Elements of an embodiment described below and actions and results (effects) attained by such elements are presented for illustrative purpose only, and are not limited to the disclosure below.

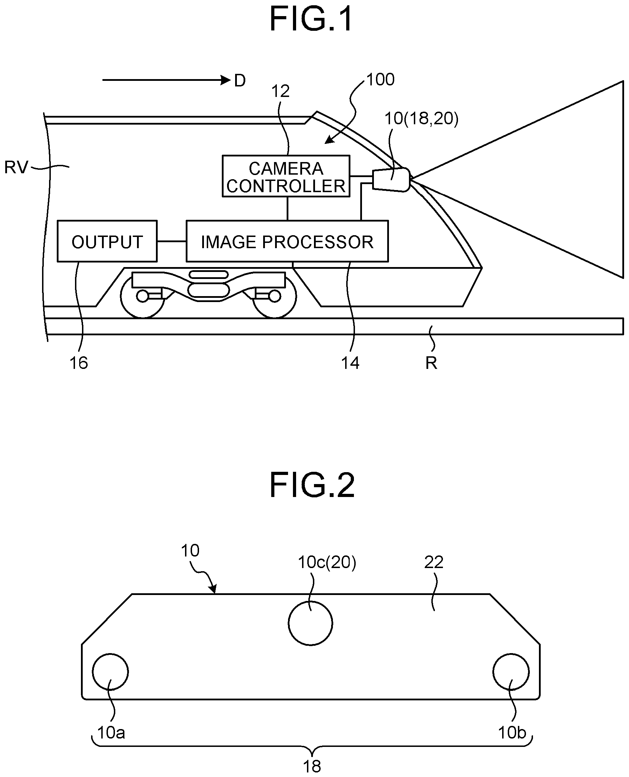

FIG. 1 is an exemplary and schematic diagram illustrating a configuration of an imaging system for a railway vehicle 100 according to an embodiment. As illustrated in FIG. 1, the imaging system 100 is mounted on a railway vehicle RV that travels on a railway track R including a pair of rails in a traveling direction D.

As illustrated in FIG. 1, the imaging system 100 includes an imaging unit 10, a camera controller 12, an image processor 14, and an output 16.

The imaging unit 10 is installed at the front end of the railway vehicle RV (in a driver's cabin in a leading railway vehicle RV, for example), to capture images of an area (forward area) in the traveling direction D of the railway vehicle RV. An image captured by the imaging unit 10 contains the railway track R. The imaging unit 10 of the embodiment includes a first imaging module 18 (a stereo camera) capable of capturing a stereo image of a first area in the traveling direction D of the railway vehicle RV and a second imaging module 20 (a monocular camera) capable of capturing images of a second area including at least a farther area than the first area.

FIG. 2 is an exemplary and schematic diagram illustrating a positional relationship between the first imaging module 18 and the second imaging module 20 in the imaging unit 10. The first imaging module 18 and the second imaging module 20 are fixed to, for example, a support member 22 (a support plate or a storage box) so as not to change in mutual positional relationship due to vibration during travelling of the railway vehicle RV.

In the embodiment, the first imaging module 18 includes a first camera 10a and a second camera 10b that are placed with a given interval along the width of the railway vehicle RV, for example. The first camera 10a and the second camera 10b are exemplified by digital cameras incorporating an image sensor such as a charge coupled device (CCD) or a CMOS image sensor (CIS), and can output high-definition (HD) video data (image data) at a given frame rate.

The second imaging module 20 includes a third camera 10c. The third camera 10c is located, for example, above the intermediate position between the first camera 10a and the second camera 10b aligned along the vehicle width, and can capture high-resolution images with resolution higher than the resolution of the first imaging module 18 (the first camera 10a and the second camera 10b). The third camera 10c is exemplified by a digital camera incorporating an image sensor such as a CCD or a CIS, and is capable of outputting video data (image data) with 4K resolution image quality at a given frame rate.

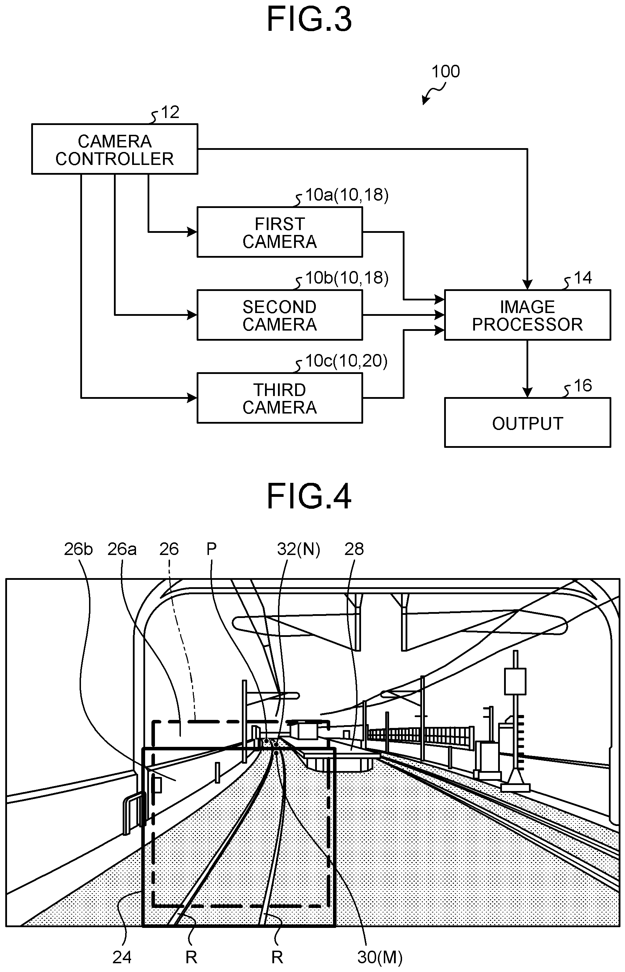

FIG. 3 is an exemplary and schematic block diagram illustrating the configuration of the imaging system 100. The function modules including the camera controller 12 and the image processor 14 may be configured as a computer including hardware such as a processor and a memory, for example. Specifically, the processor of the imaging system 100 implements the respective function modules by loading and executing a computer program from a memory such as a storage. The function modules such as the camera controller 12 and the image processor 14 may be implemented by dedicated hardware (circuitry).

The first camera 10a, the second camera 10b, and the third camera 10c are controlled by the camera controller 12. To capture an image, the camera controller 12 supplies a synchronizing signal and control signals for exposure, a shutter speed, white balance, and else to the first camera 10a, the second camera 10b, and the third camera 10c.

FIG. 4 is an exemplary and schematic diagram illustrating the positional relationship between a first area 24 captured by the first imaging module 18 (the first camera 10a, the second camera 10b) and a second area 26 captured by the second imaging module 20 (the third camera 10c). FIG. 4 illustrates a situation that the railway vehicle RV (not illustrated) travels on the railway track R to a station platform 28 ahead. As illustrated in FIG. 4, in the imaging system 100 of the embodiment, the orientations of the optical axes of the first imaging module 18 and the second imaging module 20 are set so that the second area 26 captured by the second imaging module 20 partially overlaps the first area 24 captured by the first imaging module 18. That is, the second area 26 includes, as an imaging area, a far area 26a (farther area) not included in the first area 24 and farther than the first area 24, and a near area 26b (nearer area) before the far area and overlapping the first area 24.

The image processor 14 receives image data (image signal) from the first camera 10a, the second camera 10b, and the third camera 10c and performs various kinds of image processing to the image data. The image processor 14 detects the railway track R from the first area 24, detects presence or absence of a remarkable object (such as an obstacle) on the railway track R or in a given area around the railway track R, and detects a distance to the remarkable object. Similarly, the image processor 14 detects the railway track R from the far area 26a of the second area 26, and performs object detection processing including detecting presence or absence of a remarkable object (such as an obstacle) on the railway track R or in a given area around the railway track R and estimating a distance to the remarkable object.

As described above, the first camera 10a and the second camera 10b are spaced apart from each other along the width of the railway vehicle RV, to have the respective imaging areas set to the first area 24. The first camera 10a and the second camera 10b serve to capture images of the same first area 24 (same objects contained in the first area 24) at the same timing in accordance with a synchronizing signal. As a result, the image processor 14 can acquire a stereo image (first stereo image) of the same scene from the first camera 10a and the second camera 10b. Thus, the image processor 14 can calculate a distance to the object in the first area 24 from a parallax of the acquired first stereo image by known stereo matching or triangulation. For the first camera 10a and the second camera 10b serving as HD cameras capable of capturing images with HD image quality, for example, the first area 24 can be set to an area approximately 200 meters ahead of the railway vehicle RV, which is sufficient for practical distance measurement.

The image processor 14 can detect the railway track R from the image captured by the first camera 10a or the second camera 10b by a known detecting method of the railway track R. The image processor 14 divides the image into a plurality of pixel groups (a detection area or a search area), for example, to detect the railway track R from each pixel group on the basis of a feature amount (feature as to brightness, for example). The feature amount may be a criterion indicating a similarity to the railway track R based on a given standard. The stationary positions of the first camera 10a and the second camera 10b in the railway vehicle RV are known and the railway vehicle RV travels on the railway track R. That is, it is possible to estimate the position of the railway track R in the first area 24 to be captured by the first camera 10a and the second camera 10b. Thus, setting the detection area to an area including the estimated position of the railway track R in the first area 24 makes it possible to efficiently detect the railway track R from the first area 24 with a less load. The image processor 14 may generate a distance image reflecting distance information, from the stereo image received from the first camera 10a and the second camera 10b. The image processor 14 may set a detection area on the generated distance image to detect the railway track R.

Meanwhile, the third camera 10c has the imaging area including the first area 24 and functions as a monocular camera, therefore, it cannot calculate a distance to a remarkable object in the far area 26a but can recognize the object, if there is one. In the case of the third camera 10c being a 4K camera capable of capturing images with 4K image quality, for example, the third camera 10c can detect a remarkable object (hereinafter, referred to as an obstacle) from the far area 26a of the second area 26 that is located approximately 400 meters ahead of the railway vehicle RV, for example.

As described above, the image processor 14 can acquire accurate distance information from the first area 24 imaged by the first camera 10a and the second camera 10b. The image processor 14 can accurately calculate a distance to an object M and the size of the object M located in a farthest part 30 of the first area 24. In this case, an object N located in a nearest part 32 of the far area 26a adjacent to the farthest part 30 appears approximately the same in size as the object M. The size of a remarkable object located in the far area 26a, such as an obstacle located around the railway track R, for example, is known. For example, the sizes of power-transmission poles installed along the railway track R and of structures around the railway track R are known. Thus, the image processor 14 can calculate a length (size) corresponding to one pixel of the far area 26a. That is, the image processor 14 calculates a first distance to a first position (the object M, for example) in the first area to be able to estimate a second distance to a second position (an object P) in the second area 26 (the far area 26a) from the first distance. In this case, the third camera 10c captures the image data in 4K image quality, therefore, it can sufficiently ensure reliability of the distance estimation from the number of pixels.

Moreover, the image processor 14 can detect a remarkable object (obstacle such as the object M or the object P) from the first area 24 and the second area 26 (far area 26a) by known pattern matching of the detected railway track R and the surrounding area, for example.

Thus, combining the image data captured by the first imaging module 18 with the image data captured by the second imaging module 20 can expand a substantive detection area of an obstacle or obstacles. At the initial braking speed of the railway vehicle RV being 100 km/h, for example, a braking distance is, for example, about 400 meters or below. In this case, as the maximum speed of the railway vehicle RV increases, the braking force in a higher-speed range increases, therefore, the braking distance at the initial braking speed of 100 km/h is further shortened. That is, if it is possible to estimate the position of an obstacle located 400 meters ahead of the railway vehicle RV, the braking control over the railway vehicle RV can start from about 400 meters before the obstacle, for example. When the railway vehicle RV approaches an obstacle located in the near area 200 meters or less ahead, for example, the image processor can accurately measure a distance to the obstacle. As a result, the railway vehicle RV can be stopped before contacting the obstacle detected at 400 meters ahead of the railway vehicle RV, for example. In addition, the railway vehicle RV can be smoothly decelerated in the area 200 meters or less ahead under detailed braking control, for example. Consequently, the imaging system 100 is applicable to obstacle detection by the railway vehicle RV and automatic braking control over the railway vehicle RV that autonomously travels.

In the example as above, the image processor 14 receives the first stereo image from the first camera 10a and the second camera 10b to calculate a distance to the obstacle in the first area 24. As described above, the second area 26, i.e., the imaging area of the third camera 10c partially overlaps the first area 24, i.e., the imaging areas of the first camera 10a and the second camera 10b. Thus, the image processor 14 can receive a stereo image (second stereo image) of the same scene in the overlapping area between the first area 24 and the second area 26 from the second camera 10b and the third camera 10c, for example. Similarly, the image processor 14 can receive a stereo image (third stereo image) of the same scene in the overlapping area between the first area 24 and the second area 26 from the third camera 10c and the first camera 10a, for example. Thus, the image processor 14 can measure a distance to the obstacle in the overlapping area from the second stereo image and the third stereo image, as with the distance measurement from the first stereo image. As a result, the image processor 14 can calculate an average of a result of the distance measurement based on the first stereo image, a result of the distance measurement based on the second stereo image, and a result of the distance measurement based on the third stereo image, for example, to be able to improve the accuracy of the distance to the obstacle in the overlapping area. That is, the image processor 14 can improve the accuracy of distance measurement relative to the obstacle that the railway vehicle RV is approaching. Moreover, the image processor 14 can improve the accuracy of the distance estimation relative to the obstacle located in the far area 26a.

In this case, the first camera 10a and the second camera 10b being HD cameras differ in resolution from the third camera 10c being a 4K camera. The image data captured by the third camera 10c is thus subjected to processing to match the resolution of the first camera 10a or the second camera 10b, to enable processing of a stereo image.

Traditionally, to autonomously operate the railway vehicle RV on the basis of obstacle detection and distance measurement with a stereo camera, a malfunction (failure in a camera or wiring defect, for example) of one of the cameras of the stereo camera makes distance measurement to an obstacle impossible. This may result in stop of the autonomous travelling. Meanwhile, in spite of a malfunction of either the first camera 10a or the second camera 10b, the imaging system 100 of the embodiment can continue to measure (detect) the distance to the obstacle using the third camera 10c as the stereo camera, in place of the first camera 10a or the second camera 10b with a failure. That is, irrespective of occurrence of a malfunction of any of the first camera 10a, the second camera 10b, and the third camera 10c, the railway vehicle RV can continue to autonomously travel.

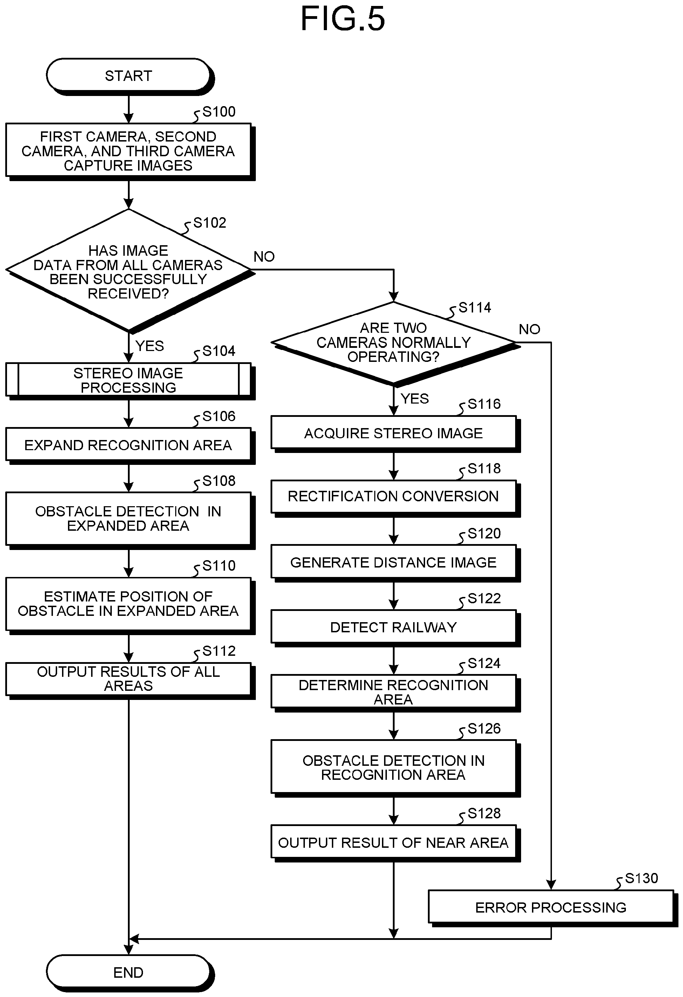

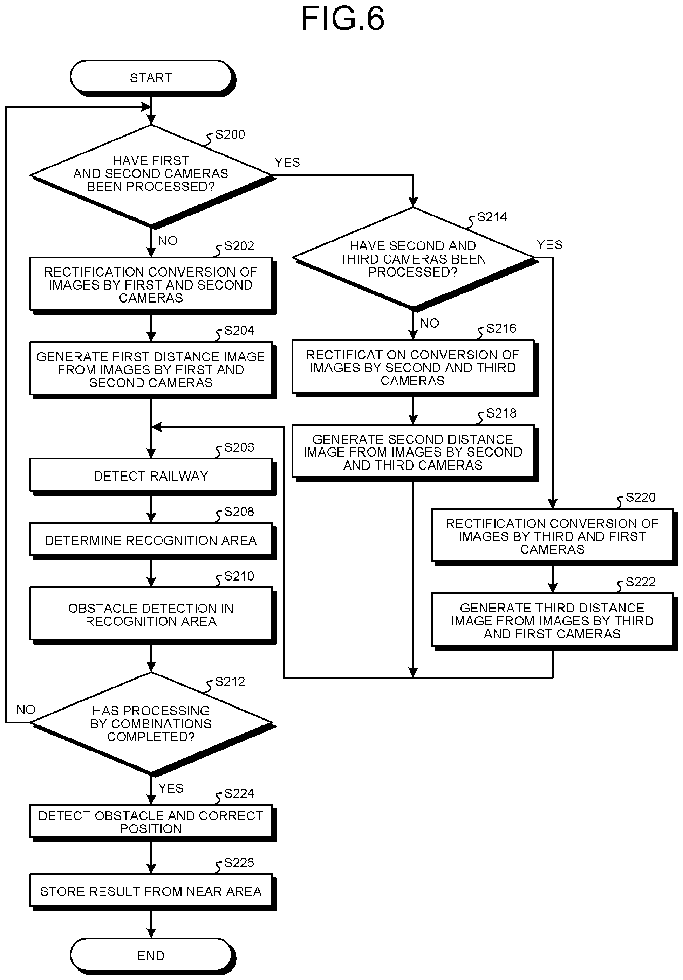

The following will describe detecting a remarkable object (an obstacle, for example), that is, a series of stereo image processing by the imaging system 100 as configured above, with reference to exemplary and schematic flowcharts illustrated in FIG. 5 and FIG. 6. The processing illustrated in the flowchart of FIG. 5 is repeated in a given processing cycle.

In an operable state of the railway vehicle RV (for example, during power-on), the camera controller 12 of the imaging system 100 causes the first camera 10a and the second camera 10b to capture images of the first area 24, and the third camera 10c to capture an image of the second area 26 (S100). The camera controller 12 supplies a synchronizing signal and control signals for exposure, a shutter speed, and a white balance to the first camera 10a, the second camera 10b, and the third camera 10c to capture the images of the same scene under the same condition. The first camera 10a, the second camera 10b, and the third camera 10c are configured to individually receive control signals and power supply, for example. Thus, a malfunction of any of the cameras, if it occurs, does not affect the normally operating cameras from capturing images and outputting image data.

After succeeding in acquiring image data successively from all the cameras (the first camera 10a, the second camera 10b, and the third camera 10c) (Yes at S102), the image processor 14 performs processing to a stereo image (S104). The stereo image processing will be described in detail, referring to the flowchart of FIG. 6.

First, after determining that the image (first stereo image) captured by the first camera 10a and the second camera 10b has not been processed (No at S200), the image processor 14 subjects the image captured by the first camera 10a and the second camera 10b to rectification conversion (S202). That is, the image processor 14 converts the first stereo image into the one from which parallax is detectable through stereo matching. The image processor 14 then generates a first distance image containing distance information from the images (first stereo image) captured by the first camera 10a and the second camera 10b according to the detected parallax (S204).

The image processor 14 detects the railway track R from the first distance image by a known detecting method of the railway track R using the feature as to brightness, for example (S206). As described above, the location of the railway track R in the image is generally known. Thus, the image processor 14 can decrease a processing load by setting the detection area of the railway track R to an estimated location. Next, the image processor 14 sets a recognition area for the detected railway track R to detect an obstacle (S208). The image processor 14 detects an obstacle from the set recognition area by a known detecting method (such as pattern matching) (S210). The obstacle detection is mainly intended for ensuring safe operation of the railway vehicle RV, therefore, setting the recognition area to a given limited area on or around the railway track R is basically sufficient for that purpose. The image processor 14 can decrease a processing load in terms of the obstacle detection by setting the recognition area to a limited area.

Upon incompletion of the obstacle detection with the combinations of the first camera 10a, the second camera 10b, and the third camera 10c (No at S212), the image processor 14 returns to the operation at S200.

After determining at S200 that the image (first stereo image) captured by the first camera 10a and the second camera 10b has been processed (Yes at S200) and the image (second stereo image) captured by the second camera 10b and the third camera 10c has not been processed (No at S214), the image processor 14 performs rectification conversion to the image captured by the second camera 10b and the third camera 10c (S216). That is, the image processor 14 converts the second stereo image into the one from which parallax is detectable through stereo matching. The image processor 14 then generates a second distance image containing distance information from the image (second stereo image) captured by the second camera 10b and the third camera 10c (S218) according to the detected parallax.

As in the operation to the first distance image, the image processor 14 detects the railway track R from the second distance image (S206) to set a recognition area therefor (S208). The image processor 14 performs an obstacle detection to the set recognition area of the second distance image (S210), and determines again at S212 whether the obstacle detection with the combinations of the cameras is completed (S212).

After determining at S214 that the image (second stereo image) captured by the second camera 10b and the third camera 10c has been processed (Yes at S214), the image processor 14 performs rectification conversion to the image captured by the third camera 10c and the first camera 10a (S220). That is, the image processor 14 converts the third stereo image into the one from which parallax is detectable through stereo matching. The image processor 14 then generates a third distance image containing distance information from the image (third stereo image) captured by the third camera 10c and the first camera 10a according to the detected parallax (S222).

As in the operation to the first distance image and the second distance image, the image processor 14 detects the railway track R from the third distance image (S206) to set a recognition area therefor (S208). The image processor 14 detects an obstacle from the set recognition area of the third distance image (S210), and determines again at S212 whether the obstacle detection with the combinations of the cameras is completed (S212).

After determining completion of the obstacle detection with the combinations of the first camera 10a, the second camera 10b, and the third camera 10c (detection from the first distance image, the second distance image, and the third distance image) at S212 (Yes at S212), the image processor 14 corrects a distance to the obstacle being a remarkable object and corrects an obstacle detected position (improvement in accuracy of distance) on the basis of results of the detection (S224). The image processor 14 temporarily stores the detected obstacle and the distance to the obstacle in the storage as a result of the detection from the near area (the first area 24 or the overlapping area between the first area 24 and the second area 26) (S226).

Thus, the three stereo cameras of combinations of the first camera 10a, the second camera 10b, and the third camera 10c individually measure the distance to the obstacle and reflect the measurements in the obstacle detected position, which can improve the accuracy of distance measurement to the obstacle in the overlapping area between the first area 24 and the second area 26. According to another embodiment, in the normal operation of the first camera 10a, the second camera 10b, and the third camera 10c (i.e., outputting image data normally), the generation of the second distance image and the third distance image may be omissible. In this case, the image processor 14 can implement the distance measurement to the obstacle in the near area from the stereo image with a reduced load.

After completion of the obstacle detection in the near area, the image processor 14 returns to the flowchart of FIG. 5, and adds the far area 26a captured by the third camera 10c to the near area to expand the detection area of the railway track R (setting of an expanded recognition area) (S106). Then, the image processor 14 detects an obstacle from the expanded recognition area (S108). Prior to the obstacle detection from the expanded recognition area, the image processor 14 may detect the railway track R to set the detection area of an obstacle by a known detecting method of the railway track R using the feature as to brightness, similarly to the first area 24. Moreover, according to another embodiment, the image processor 14 may focus on continuity of the railway track R over the first area 24 and the far area 26a, regard the railway track R detected in the first area 24 as extending to the far area 26a, and detect an obstacle from the area extended from the first area 24.

Subsequently, the image processor 14 estimates a distance to the obstacle in the expanded area (far area 26a) (S110). As described above, the object M in the farthest part 30 of the near area (first area 24) substantially matches in size with the object N in the nearest part 32 of the far area 26a. The image processor 14 can calculate the distance to the object M accurately by processing the stereo image of the first area 24. Thus, the image processor 14 can estimate the position of the obstacle (distance to the obstacle) detected in the far area 26a from the distance to the obstacle M (obstacle N) through comparison of the sizes between the obstacle N in the far area 26a and an obstacle located farther than the obstacle N. In view of ensuring safe travelling of the railway vehicle RV, detecting an obstacle and a location thereof in the first area 24 and detecting an obstacle in the far area 26a can help the railway vehicle RV travel safely. According to another embodiment, thus, the image processor 14 may omit the operation of S110. Thereby, the image processor 14 can reduce a processing load as to the far area 26a.

The image processor 14 outputs results of the detection of the obstacle to the output 16 (S112), temporarily ending this processing. That is, after detecting an obstacle from the first area 24 (or the overlapping area between the first area 24 and the second area 26) through the stereo image processing at S104, the image processor 14 provides, through the output 16, the detected obstacle and the position thereof (distance thereto) to the operation system of the railway vehicle RV and an external system that serves to manage and monitor the travelling of the railway vehicle RV, to reflect them in the control of the railway vehicle RV.
Similarly, after detecting an obstacle from the far area 26a, the image processor 14 provides, through the output 16, information indicating detection of the obstacle to the operation system of the railway vehicle RV and the external system, and reflects the information in the control of the railway vehicle RV. After detecting an obstacle from the far area 26a and estimating the position (distance) thereof, the image processor 14 may output such information as well through the output 16. The image processor 14 may add emphatic signals for highlighting the obstacle and alarm signals to the detected obstacle at the time of providing the information to the external system (security center) through the output 16, for example.

After determining a failure in successively receiving image data from all the cameras (first camera 10a, second camera 10b, and third camera 10c) at S102 (No at S102), the image processor 14 checks the number of the cameras normally operating (S114). If two of the first camera 10a, the second camera 10b, and the third camera 10c are normally outputting image data to the image processor 14 (Yes at S114), the image processor 14 acquires the stereo image captured by the two cameras (S116). That is, the image processor 14 acquires any of the first stereo image, the second stereo image, and the third stereo image. The image processor 14 subjects the acquired stereo image to rectification conversion (S118). That is, the image processor 14 converts the acquired stereo image into the one from which parallax is detectable through stereo matching. The image processor 14 generates the distance image from the stereo image in accordance with the detected parallax (S120).

The image processor 14 detects the railway track R from the generated distance image by a known detecting method of the railway track R using the feature as to brightness (S122). Next, the image processor 14 sets, for the detected railway track R, a recognition area in which an obstacle is to be detected (S124). The image processor 14 detects an obstacle from the set recognition area by a known detecting method (pattern matching, for example) (S126). The image processor 14 outputs a result of the detection of an obstacle in the near area through the output 16 (S128), temporarily ending this processing. That is, the image processor 14 performs obstacle detection processing, using the two cameras capable of outputting normal image data at the moment. In the case of a malfunction of the third camera 10c, the image processor 14 performs obstacle detection in a limited area, that is, the first area 24 which the first camera 10a and the second camera 10b can normally capture. Meanwhile, irrespective of a malfunction of either the first camera 10a or the second camera 10b, the image processor 14 can detect presence or absence of an obstacle and the position thereof from the overlapping area between the first area 24 and the second area 26, and can detect an obstacle from the far area 26a, if any.

When there are no two cameras capable of normally outputting image data at S114 (No at S114), the image processor 14 determines that detection of an obstacle, if any, and the position thereof (distance thereto) is unfeasible, and performs error processing (S130). That is, the image processor 14 provides error information to the operation system of the railway vehicle RV or the external system through the output 16, to reflect the error information in the control of travelling of the railway vehicle RV. For example, the operation system or the external system causes the railway vehicle RV to temporarily stop travelling.

As described above, the imaging system 100 can enlarge the detection area for the remarkable object, such as an obstacle, by capturing the stereo image of the same scene from the images captured by the first camera 10a, the second camera 10b, and the third camera 10c. Typically, it is unlikely that two or more cameras malfunction at the same time. The imaging system 100 can acquire a stereo image with at least two cameras. Thus, the imaging system 100 can avoid occurrence of the situation that a malfunction of one of the cameras directly causes the railway vehicle RV to become unable to autonomously operate.

The present embodiment has described one example of the imaging unit 10 that the first imaging module 18 includes two HD cameras (first camera 10a and second camera 10b) and the second imaging module 20 includes one 4K camera (third camera 10c). In this case, the imaging system 100 including a minimum number of elements can expand the obstacle detection area and deal with a malfunction of a camera. According to another embodiment, the imaging unit 10 may include four or more cameras, which can exert the same effects.

Moreover, the embodiment has described the example that the imaging system 100 is applied to the railway vehicle RV that is autonomously operable. According to another embodiment, the imaging system 100 may be applied to a railway vehicle where a driver can ride (regardless of whether the driver operates the vehicle), which can exert the same effects. In this case, the output 16 may display the image, as illustrated in FIG. 4, on a display installed at a driver's seat, for example, and display a result of detection of an obstacle or output an audio message or alarm sound corresponding to the result.

## Claims

1. An imaging system for a railway vehicle (100), comprising:
a first imaging module (18), placed in a leading railway vehicle (RV), for capturing a stereo image of a first area (24) in a traveling direction (D) of the railway vehicle (RV);
a second imaging module (20), placed in the leading railway vehicle (RV) and capable of capturing a second area (26) including a farther area (26a) and a nearer area (26b), the farther area (26a) being farther than at least the first area (24), the nearer area (26b) overlapping the first area (24) before the farther area (26a), the second imaging module (20) being configured to capture a high-resolution image with resolution higher than resolution of the first imaging module (18); and
an image processor (14) configured to:
calculate a first distance to a first position in the nearer area (26b) overlapping the first area (24), the first distance being calculated from the stereo image captured by the first imaging module (18),
calculate a length corresponding to one pixel of the farther area (26a) in the high-resolution image captured by the second imaging module (20), the length being calculated based on a known size of an object located in the farther area (26a), and
estimate a second distance to a second position in the farther area (26a) of the second area (26), the second distance being estimated from the first distance and the length corresponding to one pixel of the farther area (26a).

2. The imaging system (100) according to claim 1, wherein
the first imaging module (18) includes a first camera (10a) and a second camera (10b), and
the second imaging module (20) includes a third camera (10c), the system (100) further comprising:
a camera controller (12) configured to:
cause the first camera (10a) and the second camera (10b) to capture a first stereo image of the first area (24),
cause the second camera (10b) and the third camera (10c) to capture a second stereo image containing at least part of the first area (24), and
cause the third camera (10c) and the first camera (10a) to capture a third stereo image containing at least part of the first area, and
an image processor (14) configured to perform object detection processing with respect to the first area (24) based on the first stereo image, the second stereo image, and the third stereo image.

3. The imaging system (100) according to claim 2, wherein
the image processor (24) causes two of the first camera (10a), the second camera (10b), and the third camera (10c) to continuously capture the stereo image.

## Patentansprüche

1. Bildaufnahmesystem für ein Schienenfahrzeug (100), umfassend:
ein erstes Bildaufnahmemodul (18), das in einem führenden Schienenfahrzeug (RV) angeordnet ist, zum Aufnehmen eines Stereobildes eines ersten Bereichs (24) in einer Fahrtrichtung (D) des Schienenfahrzeugs (RV);
ein zweites Bildaufnahmemodul (20), das in dem führenden Schienenfahrzeug (RV) angeordnet ist und das in der Lage ist, einen zweiten Bereich (26) aufzunehmen, umfassend einen entfernteren Bereich (26a) und einen näheren Bereich (26b), wobei der entferntere Bereich (26a) entfernter als zumindest der erste Bereich (24) ist, wobei der nähere Bereich (26b) mit dem ersten Bereich (24) überlappt vor dem entfernteren Bereich (26a), wobei das zweite Bildaufnahmemodul (20) konfiguriert ist, ein hochauflösendes Bild mit einer Auflösung aufzunehmen, die höher ist als die Auflösung des ersten Bildaufnahmemoduls (18); und
einen Bildprozessor (14), der konfiguriert ist:
einen ersten Abstand zu einer ersten Position in dem näheren Bereich (26b), der den ersten Bereich (24) überlappt, zu berechnen, wobei der erste Abstand berechnet wird aus dem von dem ersten Bildaufnahmemodul (18) aufgenommenen Stereobild,
eine Länge entsprechend einem Pixel des entfernteren Bereichs (26a) in einem hochauflösenden Bild zu berechnen, das von dem zweiten Bildaufnahmemodul (20) aufgenommen wird, wobei die Länge berechnet wird, basierend auf einer bekannten Größe eines Objekts, das in dem entfernteren Bereich (26a) angeordnet ist, und
einen zweiten Abstand zu einer zweiten Position in dem entfernteren Bereich (26a) des zweiten Bereichs (26) zu schätzen, wobei der zweite Abstand aus dem ersten Abstand und der Länge entsprechend dem einen Pixel des entfernteren Bereichs (26) geschätzt wird.

2. Bildaufnahmesystem (100) gemäß Anspruch 1, wobei
das erste Bildaufnahmemodul (18) eine erste Kamera (10a) und eine zweite Kamera (10b) umfasst, und
das zweite Bildaufnahmemodul (20) eine dritte Kamera (10c) umfasst, wobei das System (100) ferner umfasst:
eine Kamerasteuerung (12), die konfiguriert ist:
zu bewirken, dass die erste Kamera (10a) und die zweite Kamera (10b) ein erstes Stereobild des ersten Bereichs (24) aufnehmen,
zu bewirken, dass die zweite Kamera (10b) und die dritte Kamera (10c) ein zweites Stereobild aufnehmen, das mindestens einen Teil des ersten Bereichs (24) enthält, und
zu bewirken, dass die dritte Kamera (10c) und die erste Kamera (10a) ein drittes Stereobild aufnehmen, das zumindest einen Teil des ersten Bereichs enthält, und
einen Bildprozessor (14), der konfiguriert ist, eine Objekterkennungsverarbeitung in Bezug auf den ersten Bereich (24) basierend auf dem ersten Stereobild, dem zweiten Stereobild und dem dritten Stereobild durchzuführen.

3. Bildgebungssystem (100) gemäß Anspruch 2, wobei der Bildprozessor (24) bewirkt, dass zwei der ersten Kamera (10a), der zweiten Kamera (10b) und der dritten Kamera (10c) das Stereobild kontinuierlich aufnehmen.

## Revendications

1. Un système d'imagerie pour un véhicule ferroviaire (100), comprenant :
un premier module d'imagerie (18), placé dans un véhicule ferroviaire de tête (RV), pour capturer une image stéréo d'une première zone (24) dans une direction de déplacement (D) du véhicule ferroviaire (RV) ;
un deuxième module d'imagerie (20), placé dans le véhicule ferroviaire de tête (RV) et capable de capturer une deuxième zone (26) comprenant une zone plus éloignée (26a) et une zone plus proche (26b), la zone plus éloignée (26a) étant plus éloignée qu'au moins la première zone (24), la zone plus proche (26b) chevauchant la première zone (24) avant la zone plus éloignée (26a), le deuxième module d'imagerie (20) étant configuré pour capturer une image de haute résolution avec une résolution supérieure à une résolution du premier module d'imagerie (18) ; et
un processeur d'image (14) configuré pour :
calculer une première distance jusqu'à une première position dans la zone plus proche (26b) chevauchant la première zone (24), la première distance étant calculée à partir de l'image stéréo capturée par le premier module d'imagerie (18),
calculer une longueur correspondant à un pixel de la zone plus éloignée (26a) dans l'image de haute résolution capturée par le deuxième module d'imagerie (20), la longueur étant calculée sur la base d'une dimension connue d'un objet situé dans la zone plus éloignée (26a), et
estimer une seconde distance jusqu'à une seconde position dans la zone plus éloignée (26a) de la deuxième zone (26), la seconde distance étant estimée à partir de la première distance et de la longueur correspondant à un pixel de la zone plus éloignée (26a).

2. Le système d'imagerie (100) selon la revendication 1, dans lequel
le premier module d'imagerie (18) comprend une première caméra (10a) et une deuxième caméra (10b), et
le deuxième module d'imagerie (20) comprend une troisième caméra (10c), le système (100) comprenant en outre
un contrôleur de caméra (12) configuré pour :
faire en sorte que la première caméra (10a) et la deuxième caméra (10b) capturent une première image stéréo de la première zone (24),
faire en sorte que la deuxième caméra (10b) et la troisième caméra (10c) capturent une deuxième image stéréo contenant au moins une partie de la première zone (24), et
faire en sorte que la troisième caméra (10c) et la première caméra (10a) capturent une troisième image stéréo contenant au moins une partie de la première zone, et
un processeur d'image (14) configuré pour effectuer un traitement de détection d'objet par rapport à la première zone (24) sur la base de la première image stéréo, de la deuxième image stéréo et de la troisième image stéréo.

3. Le système d'imagerie (100) selon la revendication 2, dans lequel
le processeur d'image (24) fait en sorte que deux des première caméra (10a), deuxième caméra (10b) et troisième caméra (10c) capturent en continu l'image stéréo.
